# EUROPÄISCHE PATENTANMELDUNG

(11) **EP 2 226 548 A1**
(43) Veröffentlichungstag der Anmeldung: **08.09.2010**
(21) Anmeldenummer: 09003185.7
(22) Anmeldetag: 05.03.2009
(51) Int. Cl.: F16P 1/02, F16P 3/14

(54) **Vorrichtung zur Absicherung von Gefahrenbereichen einer Maschine**

(71) Anmelder: DREISTERN GmbH & Co.KG, 79650 Schopfheim (DE)
(72) Erfinder: Weber, Heinrich, 79379 Müllheim (DE); Ganter, Wolfgang, 79585 Steinen (DE)
(74) Vertreter: Lemcke, Brommer & Partner

(57) **Zusammenfassung**

Es wird eine Vorrichtung zur Absicherung von Gefahrenbereichen einer Maschine, insbesondere einer Profiliermaschine, gegen unberechtigten Zugriff oder unbeabsichtigten Kontakt vorgeschlagen. Diese Vorrichtung ist zumindest teilweise deaktivierbar oder entfernbar, um einen Zugang zur Maschine zu ermöglichen. Erfindungsgemäß besteht diese Vorrichtung in einem unteren Teil des Gefahrenbereichs aus einer ein- oder mehrteiligen Abdeckung 6, 7, und in einem oberen Teil des Gefahrenbereichs aus einem ein- oder mehrteiligen Lichtgitter 10.

## Beschreibung

Die Erfindung betrifft eine Vorrichtung zur Absicherung von Gefahrenbereichen einer Maschine gegen unberechtigten Zugriff oder unbeabsichtigten Kontakt, wobei die Vorrichtung zumindest teilweise deaktivierbar oder entfernbar ist, um einen Zugang zur Maschine zu ermöglichen.

Das bevorzugte Anwendungsgebiet der vorliegenden Erfindung ist die Absicherung von Profiliermaschinen, in denen eine Anzahl von in Linie hintereinander angeordneten Umformstationen mit Rollumformwerkzeugen ein sukzessives Kaltverformen von Metallbändern in Metallprofile oder Rohre bewirkt. Gegebenenfalls werden die Umformstationen durch eine Schweißstation sowie Kalibrierstationen ergänzt. Allerdings ist das Anwendungsgebiet der vorliegenden Erfindung nicht auf die Absicherung von Profiliermaschinen beschränkt; die Erfindung kann vielmehr überall dort eingesetzt werden, wo die Überwachung eines unbeabsichtigten oder unberechtigten Zugangs zu einem Gefahrenbereich oder einem sonstigen Überwachungsbereich erwünscht oder notwendig ist.

Insbesondere bei der Absicherung einer Profiliermaschine muss die Vorrichtung zur Absicherung zumindest teilweise entfernbar bzw. deaktivierbar sein, um einen Zugang zur Maschine zu ermöglichen. So ist es insbesondere notwendig, dass die Umformstationen der Profiliermaschine bedarfsweise zugänglich gemacht werden, um sie mittels eines Krans aus der Profiliermaschine herauszuheben. Des Weiteren ist es bei Profiliermaschinen notwendig, dass die Verstelleinrichtungen der einzelnen Umformstationen zugänglich gemacht werden können, gegebenenfalls sogar während des Betriebs im Rahmen einer zusätzlichen Betriebsart.

Aufgrund dieser speziellen Anforderungen bietet es sich an, ein ein- oder mehrteiliges Lichtgitter als Vorrichtung zur Absicherung einer Profiliermaschine zu verwenden: Wird ein Lichtstrahl des Lichtgitters unterbrochen, wird dies automatisch erkannt und kann beispielsweise zur sofortigen Notabschaltung der Profiliermaschine führen. Hierdurch kann wirksam verhindert werden, dass Personen oder Gegenstände unbeabsichtigt in den Gefahrenbereich der Maschine eindringen; denn die Gefahrenquelle wird gegebenenfalls unmittelbar durch Stillsetzen der Maschine beseitigt. Ein solches Lichtgitter bietet den entscheidenden Vorteil, dass der abgesicherte Bereich der Maschine jederzeit frei zugänglich bleibt, beispielsweise um Justierarbeiten durchzuführen oder ganze Umformstationen mittels eines Krans zu entnehmen oder einzustellen. Durch einfaches Deaktivieren des Lichtgitters wird die Maschine sogar während des Betriebs vollständig und frei zugänglich.

Solche Lichtgitter haben bei der Absicherung von Gefahrenbereichen einer Maschine jedoch auch einen entscheidenden Nachteil: Um eine wirksame Absicherung zu gewährleisten, ist es meist nicht ausreichend, bei Unterbrechung eines oder mehrerer Lichtstrahlen des Lichtgitters ein Warnsignal zu generieren. Vielmehr ist es in der Regel notwendig, eine sofortige Notabschaltung der überwachten Maschine oder des entsprechenden Maschinenteils auszulösen. Allzuleicht kommt es nun jedoch vor, dass die in Bodennähe verlaufenden Lichtstrahlen des Lichtgitters durch unachtsames Personal unbeabsichtigterweise, und ohne dass unmittelbarer Handlungsbedarf gegeben wäre, übertreten werden. Wenn dies jedes Mal zum Stillsetzen der Maschine führt, entsteht letztendlich ein signifikanter Produktionsausfall.

Die Absicherung von Gefahrenbereichen einer Maschine kann auch durch Abdeckungen, Schutzzäune und dergleichen gewährleistet werden. Ein unbeabsichtigtes Berühren der Abdeckung oder des Schutzzauns führt dann nicht zu einer Abschaltung der Maschine, wobei die die Absicherung berührende Person dennoch keinerlei Sicherheitsrisiko ausgesetzt ist. Der große Nachteil einer Abdeckung besteht allerdings darin, dass die damit abgesicherte Maschine nicht zugänglich ist. Für einen Zugang zur Maschine ist es vielmehr erforderlich, die Abdeckungen zumindest teilweise zu entfernen.

Bei Profiliermaschinen ist es mitunter nötig, sämtliche Umformstationen für Justier- und Verstellarbeiten an den Rollformwerkzeugen gleichzeitig zugänglich zu machen. Es ist allerdings durchaus üblich, dass Profiliermaschinen 15 bis 20 oder mehr Umformstationen enthalten, die in Linie hintereinander angeordnet sind und gegebenenfalls gemeinsam zugänglich gemacht werden müssen. Es wäre daher ungünstig, Abdeckungen vorzusehen, die mit Türscharnieren geöffnet oder in der Art von Schiebetüren seitlich verschoben werden können. Des Weiteren müssen, wie bereits erwähnt, sämtliche Umformstationen so zugänglich gemacht werden können, dass ein Kran oder ein Stapler dieselben aus der Profiliermaschine herausheben oder in diese hineinstellen kann. Wenn Abdeckungen als Vorrichtung zur Absicherung von Gefahrenbereichen einer Profiliermaschine verwendet werden, müssen diese daher leicht demontierbar ausgebildet sein, da eine mehr oder wenige regelmäßige Demontage nicht zu vermeiden ist.

Ausgehend von diesem Stand der Technik liegt der vorliegenden Erfindung die Aufgabe zugrunde, eine Vorrichtung zur Absicherung von Gefahrenbereichen einer Maschine der eingangs genannten Art hinsichtlich ihrer Betriebssicherheit und ihrer Flexibilität bei der Zugänglichmachung der Maschine zu verbessern.

Gelöst ist diese Aufgabe durch eine Vorrichtung mit den Merkmalen des Anspruchs 1. Bevorzugte Ausgestaltungen und Weiterbildungen der erfindungsgemäßen Vorrichtung finden sich in den Ansprüchen 2 bis 10.

Die vorliegende Erfindung kombiniert also die Vorteile von mechanischen Abdeckungen mit den Vorteilen von Lichtgittern, ohne deren jeweiligen Nachteile in Kauf nehmen zu müssen: Die Vorrichtung besteht in einem unteren Teil des Gefahrenbereichs aus einer ein- oder mehrteiligen Abdeckung, während sie in einem oberen Teil des Gefahrenbereichs aus einem ein- oder mehrteiligen Lichtgitter besteht. Im oberen Teil des Gefahrenbereichs, insbesondere im oberen Bereich einer Profiliermaschine, kommen die Vorteile des Lichtgitters voll zum Tragen, da die Maschine von oben jederzeit vollständig zugänglich ist und durch Deaktivieren des Lichtgitters sogar bei laufender Maschine zugänglich wird. Ein Kran oder Stapler zum Entnehmen und Einsetzen einzelner Umformstationen wird durch das Lichtgitter nicht behindert. Gleichzeitig ist jedoch der Nachteil eines herkömmlichen Lichtgitters beseitigt, da ein unabsichtliches, bodennahes Übertreten von Lichtstrahlen des Lichtgitters nicht mehr möglich ist.

Da die Abdeckung erfindungsgemäß nur einen unteren Teil des Gefahrenbereichs absichert, werden hier die Vorteile der mechanischen Abdeckung genutzt, wobei deren Nachteile beseitigt sind, denn der obere Teil des Gefahrenbereichs bleibt frei zugänglich, ohne die Abdeckung entfernen zu müssen.

Um bedarfsweise größere Bereiche des abgesicherten Gefahrenbereichs freizugeben, kann bei einer bevorzugten Weiterbildung der Erfindung die Abdeckung nach unten absenkbar oder zumindest zum Teil nach unten abklappbar sein. Gerade bei Profiliermaschinen kann dies einen mittleren Teil des Gefahrenbereichs freigeben, um einer Bedienperson Zugang zu den Verstelleinrichtungen für die Rollformwerkzeuge zu ermöglichen. Hierfür müsste dann das oberhalb dieses Bereichs angeordnete Lichtgitter nicht deaktiviert werden, was in Anbetracht der Tatsache sehr vorteilhaft ist, dass Verstellungen an Rollformwerkzeugen meist bei laufender Profiliermaschine vorgenommen werden.

Die Abdeckung der erfindungsgemäßen Vorrichtung kann sowohl als mechanisches Gitter als auch als geschlossene Fläche, oder aber als Kombination dieser beiden Elemente ausgebildet sein. In die untere absenkbare Abdeckung können noch zusätzliche Funktionen, wie eine Druckwellenleiste für Not-Aus, ein Spritzschutz für Kühl-Schmiermittel oder eine Beleuchtung integriert sein.

Besondere Vorteile ergeben sich, wenn die Abdeckung der erfindungsgemäßen Vorrichtung zumindest teilweise durchsichtig ausgebildet ist. Insbesondere beim Absichern einer Profiliermaschine kann eine durchsichtige Abdeckung im Bereich der Verstellelemente für die Rollformwerkzeuge der einzelnen Umformstationen vorteilhaft sein.

Das Lichtgitter wird vorzugsweise von zwei Sende- und/oder Empfangseinheiten gebildet, die eine Anzahl von zwischen sich verlaufenden Lichtstrahlen erzeugen, wobei mindestens eine der beiden Sende- und/oder Empfangseinheiten mit Detektoren zum Erkennen einer Unterbrechung eines oder mehrerer Lichtstrahlen versehen ist. Die Bezeichnung "Sende- und/oder Empfangseinheit" bedeutet hierbei, dass es sich um eine Sendeeinheit zum Aussenden von Lichtstrahlen, um eine Empfangseinheit zum Empfangen von Lichtstrahlen, eine kombinierte Sende-/Empfangseinheit zum Aussenden und Empfangen von Lichtstrahlen, oder aber um eine passive Einheit, die Lichtstrahlen nicht aktiv aussendet und/oder empfängt, sondern diese lediglich passiv reflektiert, handeln kann.

Vorzugsweise umfasst das Lichtgitter der erfindungsgemäßen Vorrichtung neben den beiden Sende- und/oder Empfangseinheiten außerdem zwei zwischen diesen Einheiten angeordnete, bewegliche Zwischensende- und/oder Zwischenempfangseinheiten, die so voneinander beabstandet angeordnet sind und mit den Sende- und/oder Empfangseinheiten zusammenwirken, dass sie zwischen sich einen Teil der Lichtstrahlen ausblenden, um eine verfahrbare und/oder veränderbare Lücke im Lichtgitter zu bilden. Die zwischen den Zwischensende- und/oder Zwischenempfangseinheiten gebildete Lücke im Lichtgitter bietet dann einen in seiner Größe und in seiner Lage veränderlichen Zugang zum überwachten Gefahrenbereich, während der Rest des Lichtgitters aktiv bleibt. Wenn ein Zugang zu demjenigen Teil des Gefahrenbereichs, der erfindungsgemäß vom Lichtgitter überwacht wird, bei laufender Maschine notwendig wird, kann dies dann durch die Lücke im Lichtgitter hindurch geschehen, ohne das gesamte Lichtgitter deaktivieren zu müssen. Der nicht überwachte, zugängliche Teil des Gefahrenbereichs ist damit vorteilhafterweise minimal zu halten.

Die Zwischensende- und/oder Zwischenempfangseinheiten können relativ zueinander beweglich gehalten sein, so dass die zwischen ihnen gebildete Lücke im Lichtgitter vergrößert und/oder verkleinert und insbesondere geschlossen werden kann.

Weitere Vorteile ergeben sich, wenn die Lücke im Lichtgitter zumindest temporär mit einer weiteren Sicherheitseinrichtung, insbesondere einem weiteren Lichtgitter versehen ist.

Ein Ausführungsbeispiel der vorliegenden Erfindung wird im Folgenden anhand der beigefügten Zeichnungen näher beschrieben und erläutert. Es zeigen:
- Figur 1: eine schematische Seitenansicht einer Profiliermaschine mit erfindungsgemäß ausgestalteter Vorrichtung zur Absicherung;
- Figur 2: eine schematische Schnittdarstellung der Maschine aus Figur 1, in Produktionsrichtung gesehen;
- Figur 3: eine Darstellung wie Figur 2, beim Absenken eines Abdeckungsteils;
- Figur 4: eine Darstellung wie Figur 2 nach dem Absenken des Abdeckungsteils;
- Figur 5: eine Darstellung wie Figur 1, jedoch eines modifizierten Ausführungsbeispiels.

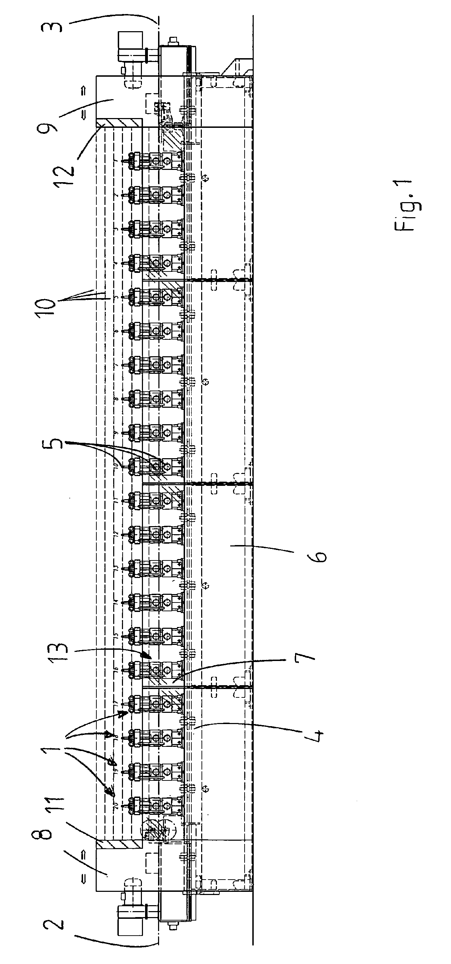

In Figur 1 ist eine schematische Seitenansicht einer Profiliermaschine dargestellt, in der eine Mehrzahl von in Linie hintereinander angeordneten Umformstationen 1 ein Metallband 2, das quasi endlos von einem (nicht dargestellten) Coil abgewickelt wird, sukzessive in ein quasi endloses Profil 3 umformen.
Dies geschieht mittels Rollformwerkzeugen 13, die in den einzelnen Umformstationen 1 verstellbar und teilweise angetrieben gelagert sind. Die Umformstationen 1 stehen auswechselbar auf einem Maschinenträger 4 und können mittels eines Krans oder eines Staplers von dort weggehoben werden.

Der Antrieb für die Rollformwerkzeuge 13 der Umformstationen 1 erfolgt in üblicher Art und Weise über Gelenkwellen von der anderen, hier nicht dargestellten Seite der Profiliermaschine her. Auf der in Figur 1 sichtbaren Seite der Profiliermaschine sind an den Umformstationen 1 - hier lediglich schematisch angedeutet - Verstelleinrichtungen 5 für die Rollformwerkzeuge 13 zugänglich, die teilweise auch bei laufender Maschine bedient werden müssen.

Um zu vermeiden, dass Personen oder Gegenstände unbeabsichtigterweise in den Bereich der laufenden Umformstationen 1 der vorliegenden Profiliermaschine gelangen, ist diese in einem unteren Teil des Gefahrenbereichs als zweiteilige Abdeckung 6, 7 ausgebildet. Der erste Teil der Abdeckung 6 ist flächig ausgebildet und setzt sich an den Stirnseiten der Profiliermaschine in einen vorderen und hinteren Gehäuseteil 8, 9 fort. Diese Gehäuseteile 8, 9 sind seitlich verschiebbar, um die Endbereiche der Anlage bedarfsweise freizugeben. Der zweite Teil der Abdeckung 7 ist durchsichtig ausgebildet. Dieser kann außerdem nach unten hinter den ersten Teil der Abdeckung 6 versenkt werden, um die unteren Bereiche der Umformstationen 1 freizugeben. Der erste untere Teil der Abdeckung 6 ist hierbei nicht zwingender Bestandteil einer erfindungsgemäßen Vorrichtung.

Oberhalb des durch die zweiteilige Abdeckung 6, 7 abgesicherten unteren Teils des Gefahrenbereichs ist ein oberer Teil des Gefahrenbereichs mit einem Lichtgitter 10 abgesichert. Dieses Lichtgitter 10 wird von zwei Sende- und/oder Empfangseinheiten 11, 12 erzeugt, die an den vorderen und hinteren Gehäuseteilen 8, 9 angebracht sind. Hierbei ist die erste der beiden Sende- und/oder Empfangseinheiten 11 mit Lichtquellen und Detektoren ausgerüstet, während die zweite der Sende- und/oder Empfangseinheiten 12 lediglich mit reflektierenden Spiegeln versehen ist. Eine Unterbrechung eines Lichtstrahls des Lichtgitters 10 wird in der Sende- und/oder Empfangseinheit 11 detektiert und führt zur Abschaltung der Profiliermaschine.

Wie Figur 1 deutlich macht, sind sämtliche Umformstationen 1 von oben her leicht zugänglich, da das Lichtgitter 10 einem Kran zum Entnehmen einzelner Umformstationen 1 keinerlei Hindernis in den Weg stellt. Der durchsichtige Teil der Abdeckung 7 kann beispielsweise zur Entnahme einer Umformstation 1 aus der Profiliermaschine abgesenkt werden, um den oberen Teil des Gefahrenbereichs bis zum Maschinenständer 4 freizugeben. Gleichzeitig erweitert der durchsichtige Teil der Abdeckung 7 den unteren Teil des Gefahrenbereichs, der mechanisch abgedeckt ist, um die unmittelbare Sicherheit der Bedienpersonen zu erhöhen. Die dritte Funktion des durchsichtigen Teils der Abdeckung 7 besteht darin, dass er bei weiterhin aktiviertem Lichtgitter 10 abgesenkt werden kann, um hierdurch einen zeitweise notwendigen Zugang zu Verstelleinrichtungen von Umformstationen 1 bei laufender Maschine zu ermöglichen. Da dies, wie gesagt, bei laufender Maschine erfolgt, ist es sehr vorteilhaft, wenn das Lichtgitter 10 aktiv bleibt, um den nichtüberwachten Teil der Maschine möglichst kleinflächig zu halten.

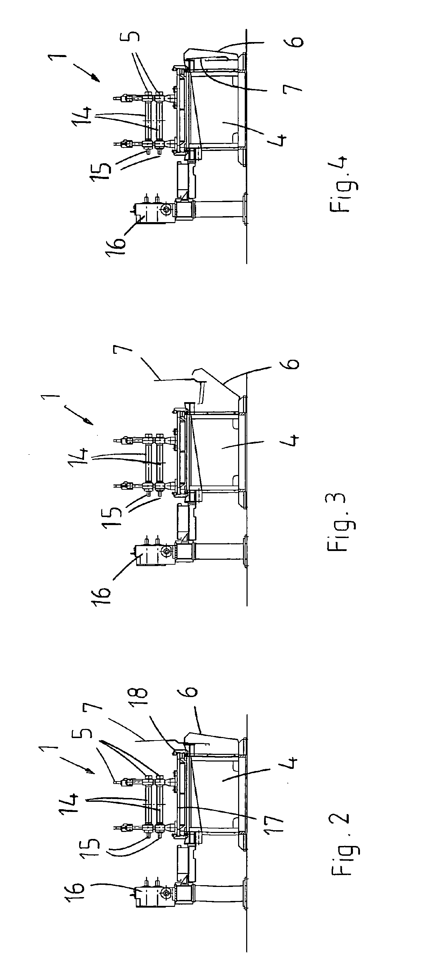

Die Figuren 2, 3 und 4 zeigen eine schematische Schnittdarstellung der Maschine aus Figur 1 in Bewegungsrichtung des Metallbands 2 gesehen. In diesen Figuren ist sichtbar, wie die Umformstationen 1 aufgebaut sind: Es handelt sich um Gerüste mit Antriebswellen 14 für Rollformwerkzeuge, die der besseren Übersichtlichkeit hier weggelassen sind. Die Antriebswellen 14 werden über Wellenzapfen 15 von einer Antriebseinheit 16 mit Drehmoment beaufschlagt, wobei die hierzu vorgesehenen Gelenkwellen zwischen der Antriebseinheit 16 und den Wellenzapfen 15 ebenfalls der besseren Übersichtlichkeit halber weggelassen worden sind. Die Umformstation 1 sitzt auf einer Wechselplatte 17, die auf den Maschinenständer 4 aufgestellt und dort mittels lösbarer Befestigungselemente 18 befestigt ist. Zur Bedienerseite hin ist die zweiteilige Abdeckung 6, 7 zu erkennen, wobei der erste Teil der Abdeckung 6 nach vorne abklappbar ist, während der zweite, obere und durchsichtige Teil 7 der Abdeckung, wie die Figuren 3 und 4 verdeutlichen, hinter den ersten Teil der Abdeckung 6 versenkt werden kann, um die Umformstationen 1 der Profiliermaschine zugänglich zu machen.

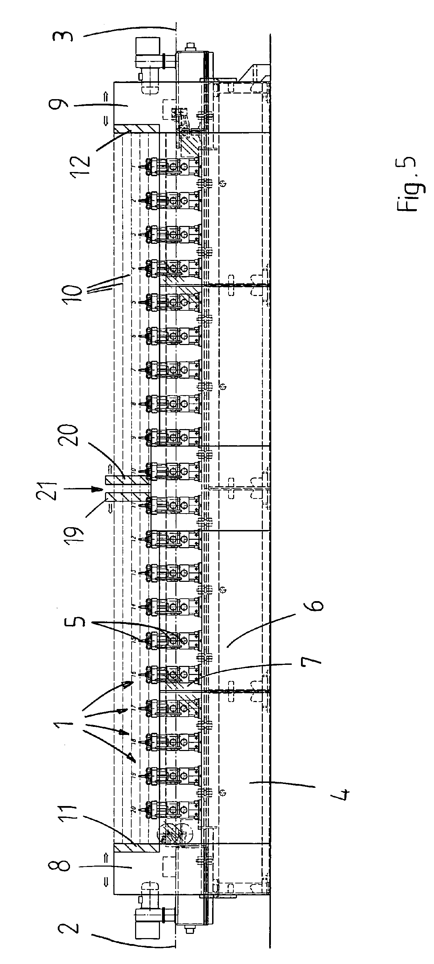

Figur 5 zeigt in einer Figur 1 entsprechenden Darstellung ein modifiziertes Ausführungsbeispiel einer erfindungsgemäßen Vorrichtung zur Absicherung einer Profiliermaschine. Die Modifikation besteht hier darin, dass beide Sende- und/oder Empfangseinheiten 11, 12 mit Lichtquellen und Detektoren ausgerüstet sind, während innerhalb des Lichtgitters 10 zwei Zwischensende- und/oder Zwischenempfangseinheiten 19, 20 angeordnet sind, die mit reflektierenden Spiegeln versehen sind, um den Bereich zwischen sich vom ansonsten aktiv bleibenden Lichtgitter 10 auszublenden. Die durch dieses Ausblenden entstandene Lücke 21 ermöglicht also einen freien Zugang zum abgesicherten Bereich, auch wenn das Lichtgitter 10 an sich nicht deaktiviert wird. Da beide Zwischensende- und/oder Zwischenempfangseinheiten 19 und 20 entlang des Lichtgitters 10 bewegbar sind, kann die Lücke 21 vergrößert und verkleinert, entlang des Lichtgitters bewegt und geschlossen werden. Alternativ zum Schließen der Lücke 21 kann diese bedarfsweise auch mit einem zweiten (hier nicht dargestellten) Lichtgitter abgesichert werden, soweit sie nicht mehr notwendig ist.

## Patentansprüche

1. Vorrichtung zur Absicherung von Gefahrenbereichen einer Maschine, insbesondere einer Profiliermaschine, gegen unberechtigten Zugriff oder unbeabsichtigten Kontakt, wobei die Vorrichtung zumindest teilweise deaktivierbar oder entfernbar ist, um einen Zugang zur Maschine zu ermöglichen,
**dadurch gekennzeichnet,**
**dass** die Vorrichtung in einem unteren Teil des Gefahrenbereichs aus einer ein- oder mehrteiligen Abdeckung (6, 7) und in einem oberen Teil des Gefahrenbereichs aus einem ein- oder mehrteiligen Lichtgitter 10 besteht.

2. Vorrichtung nach Anspruch 1,
**dadurch gekennzeichnet,**
**dass** die Abdeckung (7) wenigstens zum Teil nach unten absenkbar oder nach unten abklappbar ausgebildet ist.

3. Vorrichtung nach einem der Ansprüche 1 oder 2,
**dadurch gekennzeichnet,**
**dass** die Abdeckung (6, 7) als Gitter oder als geschlossene Fläche ausgebildet ist.

4. Vorrichtung nach mindestens einem der Ansprüche 1 bis 3,
**dadurch gekennzeichnet,**
**dass** die Abdeckung (6, 7) zumindest teilweise durchsichtig ausgebildet ist.

5. Vorrichtung nach mindestens einem der Ansprüche 1 bis 4,
**dadurch gekennzeichnet,**
**dass** die Abdeckung mit einer Beleuchtung, einer Spritzschutzeinrichtung, einer Druckwellenleitung für eine Not-Aus-Funktion oder dergleichen Zusatzfunktionen versehen ist.

6. Vorrichtung nach mindestens einem der Ansprüche 1 bis 5,
**dadurch gekennzeichnet,**
**dass** das Lichtgitter (10) zwei feste oder bewegliche Sende- und/oder Empfangseinheiten (11, 12) umfasst, die eine Anzahl von zwischen sich verlaufenden Lichtstrahlen erzeugen, wobei mindestens eine der Sende- und/oder Empfangseinheiten (11) mit Detektoren zum Erkennen einer Unterbrechung eines oder mehrerer Lichtstrahlen (10) versehen ist.

7. Vorrichtung nach Anspruch 6,
**dadurch gekennzeichnet,**
**dass** mindestens zwei zwischen den beiden Sende- und/oder Empfangseinheiten (11, 12) angeordnete, bewegliche Zwischensende- und/oder Zwischenempfangseinheiten (19, 20) vorgesehen sind, die so voneinander beabstandet angeordnet sind und mit den Sende- und/oder Empfangseinheiten (11, 12) zusammenwirken, dass sie zwischen sich einen Teil der Lichtstrahlen ausblenden, um eine verfahrbare und/oder veränderbare Lücke (21) im Lichtgitter (10) zu bilden.

8. Vorrichtung nach Anspruch 7,
**dadurch gekennzeichnet,**
**dass** die Zwischensende- und/oder Zwischenempfangseinheiten (19, 20) relativ zueinander beweglich sind, so dass die Lücke (21) vergrößert und/oder verkleinert und insbesondere geschlossen werden kann.

9. Vorrichtung nach einem der Ansprüche 7 oder 8,
**dadurch gekennzeichnet,**
**dass** die Lücke (21) im Lichtgitter (10) zumindest temporär mit einer weiteren Sicherheitseinrichtung versehen ist.

10. Vorrichtung nach Anspruch 9,
**dadurch gekennzeichnet,**
**dass** die weitere Sicherheitseinrichtung ein weiteres Lichtgitter ist.
